# FASCICULE DE BREVET EUROPEEN

(11) **EP 3 243 176 B1**
(45) Date de publication et mention de la délivrance du brevet: **01.12.2021**
(21) Numéro de dépôt: 16700867.1
(22) Date de dépôt: 08.01.2016
(51) Int. Cl.: G06Q 20/32, G06Q 20/34, G06F 21/53, H04W 12/08, G06Q 20/42, H04L 29/06, G06Q 20/02, G06Q 20/40, H04L 29/08, H04L 9/32, H04W 12/12

(54) **PROCÉDÉ DE TRAITEMENT D'UNE TRANSACTION À PARTIR D'UN TERMINAL DE COMMUNICATION**
VERFAHREN ZUR VERARBEITUNG EINER TRANSAKTION VON EINEM KOMMUNIKATIONSENDGERÄT
METHOD OF PROCESSING A TRANSACTION FROM A COMMUNICATION TERMINAL

(30) Priorité: 09.01.2015 FR 1550191; 09.01.2015 FR 1550192; 09.01.2015 FR 1550193; 13.02.2015 FR 1551240
(43) Date de publication de la demande: 15.11.2017
(73) Titulaire: Ingenico Group, 75015 Paris (FR)
(72) Inventeur: QUENTIN, Pierre, 95880 Enghien-les-bains (FR); BLANCHET, Jean-Bernard, 75013 Paris (FR)
(74) Mandataire: Vidon Brevets & Stratégie
(86) Numéro de dépôt international: PCT/EP2016/050317
(87) Numéro de publication internationale: WO 2016/110589

(56) Documents cités:
- EP-A1- 2 455 922
- WO-A1-2012/154915
- WO-A1-2012/154915
- WO-A1-2013/078499
- WO-A1-2013/078499
- WO-A1-2013/117061
- DE-A1-102011 109 318
- US-A1- 2003 145 205
- US-A1- 2013 221 092
- US-A1- 2013 221 092
- US-A1- 2014 074 655
- US-A1- 2014 074 655
- US-A1- 2015 004 934
- US-A1- 2015 004 934
- Andreas Schwier: "Scripting Server - Remote Smart Card Access", , 1 janvier 2012 (2012-01-01), XP055230567, Extrait de l'Internet: URL:http://www.openscdp.org/scriptingserve r/remoteterminal.html [extrait le 2015-11-23]

## Description

### 1. Domaine

La technique proposée se rapporte au traitement de transactions en ligne, et plus particulièrement au traitement de transactions à partir d'un terminal de communication, sous une forme sécurisée.

### 2. Art Antérieur

Deux modes de transactions coexistent lorsqu'un utilisateur souhaite effectuer une transaction de paiement à partir d'une carte bancaire :
- un mode « carte présente » : la carte bancaire est physiquement utilisée. Elle est par exemple insérée dans un terminal de paiement, et les informations qu'elle contient sont lues directement à partir de la puce ou de la bande magnétique intégrées à la carte. Alternativement, la carte bancaire est approchée d'un terminal de paiement, et les informations sont transmises via une technologie sans contact de type NFC (de l'anglais « Near Field Communication ») ;
- un mode « carte non présente»: la carte bancaire n'est pas utilisée physiquement, mais l'utilisateur saisit les informations présentes sur cette carte (numéro de carte, cryptogramme visuel, date d'expiration, nom du porteur) pour effectuer une transaction. C'est la solution aujourd'hui majoritairement utilisée pour le paiement en ligne sur Internet.

De nombreux fabricants de terminaux de communication mobiles (typiquement des smartphones ou des tablettes) cherchent aujourd'hui à développer des solutions de paiement intégrées au terminal mobile, permettant évitant à l'utilisateur d'avoir à se munir de sa carte bancaire lorsqu'il souhaite effectuer une transaction avec ce terminal mobile.

Les solutions proposées à cette fin reposent essentiellement sur une mise en œuvre basée sur le mode de transaction de type « carte non présente » décrit précédemment : dans une première phase d'initialisation du service, l'utilisateur est invité à saisir, au sein d'une application dédiée installée sur son terminal de communication, les informations associées à sa ou ses cartes bancaires (par exemple le type de carte, le numéro de carte, le cryptogramme visuel, la date d'expiration, etc.). Ces informations sont alors enregistrées au sein même du terminal de communication. Cette phase d'initialisation terminée, l'utilisateur a alors la possibilité d'utiliser l'application dédiée pour effectuer certains paiements sans avoir à se munir de sa carte bancaire et devoir ressaisir manuellement les informations qui y sont indiquées : ces informations sont alors directement transmises par le terminal de communication au serveur de paiement.

Cette solution est néanmoins limitée. D'une part, les possibilités de transactions accessibles depuis un terminal de communication mobile sont limitées et ne concernent que les transactions en ligne reposant sur un mode « carte non présente », et la solution proposée vise alors essentiellement à éviter à l'utilisateur d'avoir à saisir lui-même les données associées à sa carte bancaire à chaque fois qu'il souhaite effectuer un paiement depuis un terminal de communication (saisie souvent fastidieuse). D'autre part cette solution soulève des problèmes de sécurité : toutes les données utiles pour réaliser une transaction étant stockées au sein même du terminal de communication, un utilisateur qui a égaré ou s'est fait subtiliser son dispositif mobile (son téléphone portable par exemple) n'est pas à l'abri qu'une personne malveillante qui a récupéré son bien accède à ces informations sensibles et réalise des transactions financières en son nom (si le terminal de communication ou l'application qui les contient sont insuffisamment sécurisés par exemple).

Ce problème de sécurisation qui se pose pour la réalisation de transactions de paiement à partir d'un terminal de communication est également rencontré dans la réalisation de transactions d'autres types : dès lors qu'une autorisation est requise pour la réalisation d'une transaction à partir d'un terminal de communication, il est risqué de stocker au sein de ce même terminal de communication les informations susceptibles de donner accès à une telle autorisation.

Il existe donc un besoin d'une solution permettant d'intégrer au sein d'un terminal de communication des moyens d'obtention d'une autorisation pour la réalisation de transactions, et qui ne présente pas au moins certains de ces problèmes de l'art antérieur.

### 3. Résumé

La technique proposée offre une solution qui ne présente pas au moins certains de ces problèmes de l'art antérieur, grâce à un procédé original de traitement d'une transaction initiée au moins partiellement à partir d'un terminal de communication. Selon un premier aspect de la technique proposée, un tel procédé est mis en œuvre au sein d'un serveur de traitement de transactions connecté auditterminal de communication par l'intermédiaire d'un réseau de communication, et il comprend :
- une étape de création d'un canal de communication sécurisé avec le terminal de communication ;
- une étape d'instanciation, au sein d'un serveur d'exécution sur ledit réseau de communication, d'un terminal de paiement virtuel apte à échanger des informations avec ledit terminal de communication par le biais dudit canal de communication sécurisé ;
- une étape de traitement de transaction entre le terminal de communication et le terminal de paiement virtuel mettant en œuvre au moins un module de sécurisation du terminal de communication, ledit module de sécurisation étant configuré pour échanger un identifiant de type de service.

Ainsi, le serveur de traitement de transactions est apte à instancier un terminal de paiement virtuel apte à communiquer avec un module de sécurisation d'un terminal de communication pour le traitement d'une transaction.

Dans un mode de réalisation particulier, l'étape de traitement de transaction comprend au moins un échange de données sous la forme d'un APDU entre le module de sécurisation et le terminal de paiement virtuel.

Ainsi le protocole de communication utilisé pour les échanges de données entre le module de sécurisation et le terminal de paiement virtuel est similaire à celui mis en œuvre lors des échanges entre une carte bancaire physique et un terminal de paiement physique, c'est à dire dans un mode de type « carte présente ».

Dans un mode de réalisation particulier de la technique proposée, ladite étape de traitement de transaction comprend :
- une étape de réception, en provenance dudit terminal de paiement virtuel, d'un identifiant représentatif du type de ladite transaction à traiter, d'un index représentatif d'un jeu de données utile au traitement de ladite transaction, et d'un numéro d'identification personnel saisi sur ledit terminal de communication;
- une étape de vérification de l'adéquation entre ledit numéro d'identification personnel saisi et un numéro d'identification personnel attendu pour ledit type de transaction à traiter ;
- lorsque ladite vérification est positive, une étape d'obtention des données utiles à la poursuite de la transaction, en fonction dudit identifiant représentatif du type de ladite transaction à traiter et dudit index représentatif d'un jeu de données utile au traitement de ladite transaction;
- une étape de transmission dudit jeu de données à un serveur tiers apte à réaliser la transaction.

De cette manière, le processus d'obtention d'une d'autorisation pour la réalisation d'une transaction à partir d'un terminal de communication s'apparente à celui qui est effectué lors d'une transaction de paiement en mode « carte présente » (le module de sécurisation du terminal de communication fait alors office de carte bancaire, au moyen d'au moins une applet qui y est installée, et le terminal de paiement virtuel se comporte comme un terminal de paiement classique). Par ailleurs, une fois cette autorisation obtenue, le reste de la transaction se poursuit dans un mode de type « carte non présente ». On définit ainsi un mode de transaction hybride, qui permet de réaliser une transaction depuis un terminal de communication tout en bénéficiant des mêmes avantages en termes de sécurisation accrue que si elle avait été réalisée au moyen d'une carte bancaire dans un mode « carte présente ».

Dans encore un mode de réalisation de la technique proposée, le procédé de traitement d'une transaction comprend, préalablement à l'étape de création d'un canal de communication sécurisé avec le terminal de communication, une étape de réception d'au moins une requête d'enregistrement dudit terminal de communication auprès dudit serveur de traitement de transactions.

Ainsi, le serveur de traitement de transactions est à même de déterminer si un terminal de communication est effectivement sous tension et donc disponible pour participer à la mise en œuvre du traitement d'une transaction selon la technique proposée.

Dans encore un mode de réalisation, le procédé de traitement d'une transaction comprend, préalablement à l'étape de création d'un canal de communication sécurisé avec le terminal de communication, une étape de réception d'une requête d'initialisation d'une transaction, en provenance d'un serveur marchand.

De cette manière, le serveur de traitement de transactions est averti de l'initialisation d'une transaction auprès d'un site marchand.

Dans un mode de réalisation particulier de la technique proposée, ledit identifiant de type de service est composé de seize chiffres.

Ainsi, un identifiant de type de service est lui-même construit sur le modèle d'un numéro de carte bancaire classique, et est donc pleinement compatible avec des échanges de type APDU.

Selon encore un mode de réalisation particulier de la technique proposée, l'index représentatif d'un jeu de données associé audit type de service est transmis au terminal de paiement virtuel dans le champ 9F10 d'un APDU transmis entre le module de sécurisation et ledit terminal de paiement virtuel, lors de l'étape de traitement de la transaction.

De cette manière, le champ disponible 9F10 d'un message APDU est mis à profit pour transmettre l'index représentatif d'un jeu de données à utiliser au terminal de paiement virtuel, tout en respectant le cadre d'un message APDU.

Selon un autre aspect, la technique proposée se rapporte également à un procédé de provisionnement d'une carte virtuelle au sein d'un terminal de communication, ladite carte virtuelle étant issue d'une carte bancaire d'un utilisateur dudit terminal de communication. Un tel procédé comprend :
- une étape de sélection d'un type de service auquel ladite carte virtuelle doit être associée, parmi un ensemble de types de services prédéfinis au sein dudit terminal de communication ;
- une étape d'obtention d'un jeu de données issu de ladite carte bancaire ;
- une étape d'enregistrement d'une représentation de ladite carte bancaire, ladite représentation appartenant au groupe comprenant :
   - une photo de ladite carte bancaire ;
   - une représentation imagée de ladite carte bancaire ;
   - un sous-ensemble du numéro de ladite carte bancaire ;
- une étape de génération et de stockage d'un index (IDX) associé audit jeu de données.

De cette manière, un utilisateur a la possibilité de provisionner plusieurs cartes virtuelles issues de cartes bancaires en sa possession au sein d'un même terminal de communication au sein duquel sont prédéfinis plusieurs types de service (par exemple « paiement Visa^{®} », « paiement Mastercard^{®} », etc.). L'enregistrement d'une représentation des cartes bancaires provisionnées permet à un utilisateur de savoir quelles cartes il a provisionné, et le cas échéant d'en sélectionner celle qu'il souhaite utiliser lorsqu'il réalise une transaction. L'index permet au terminal de communication de distinguer plusieurs cartes virtuelles qui sont provisionnées pour un même type de service.

Dans un mode de réalisation particulier de la technique proposée, le terminal de communication est connecté à un serveur de traitement de transactions par l'intermédiaire d'un réseau de communication, et le procédé de provisionnement d'une carte virtuelle comprend en outre une étape de transmission, à destination dudit serveur de traitement de transactions, dudit jeu de données issu de la carte bancaire d'une part ; et dudit index associé et d'un identifiant dudit type de service sélectionné d'autre part.

De cette manière, il est possible d'associer, au sein d'une structure de données dudit serveur de traitement de transactions, ledit jeu de données audit index associé et audit identifiant du type de service considéré. Ainsi, le jeu de données issu de la carte bancaire, qui constitue des données sensibles, n'a plus besoin d'être stocké au sein dudit terminal de communication. Les seules informations qui restent stockées au sein du terminal de communication, en plus des identifiants des types de service prédéfinis, sont l'index, ainsi que la représentation de la carte bancaire.

Selon encore un autre aspect, la technique proposée concerne également un serveur de traitement de transactions initiées au moins partiellement à partir d'un terminal de communication connecté audit serveur par l'intermédiaire d'un réseau de communication. Un tel serveur comprend :
- des moyens de création d'un canal de communication sécurisé avec ledit terminal de communication ;
- des moyens d'instanciation, au sein d'un serveur d'exécution sur ledit réseau de communication, d'un terminal de paiement virtuel apte à échanger des informations avec ledit terminal de communication par le biais dudit canal de communication sécurisé ;
- des moyens de traitement de transaction entre le terminal de communication et ledit terminal de paiement virtuel mettant en œuvre au moins un module de sécurisation dudit terminal de communication, ledit module de sécurisation étant configuré pour échanger un identifiant du type de service.

Selon un autre aspect, la technique proposée se rapporte également à un terminal de communication comprenant des moyens de provisionnement d'une carte virtuelle représentative d'une carte bancaire d'un utilisateur, ledit terminal de communication comprenant :
- des moyens de sélection d'un type de service auquel ladite carte virtuelle doit être associée, parmi un ensemble de types de services prédéfinis au sein dudit terminal de communication ;
- des moyens d'obtention d'un jeu de données associées à ladite carte bancaire ;
- des moyens d'enregistrement d'une représentation de ladite carte bancaire, ladite représentation appartenant au groupe comprenant :
   - une photo de ladite carte bancaire ;
   - une représentation imagée de ladite carte bancaire ;
   - un sous-ensemble du numéro de ladite carte bancaire ;
- de moyens de génération et de stockage d'un index (IDX) associé audit jeu de données.

Selon une implémentation préférée, les différentes étapes des procédés selon la technique proposée sont mises en œuvre par un ou plusieurs logiciels ou programmes d'ordinateur, comprenant des instructions logicielles destinées à être exécutées par un processeur de données d'un module relais selon la technique proposée et étant conçu pour commander l'exécution des différentes étapes des procédés.

En conséquence, la technique proposée vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

La technique proposée vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon la technique proposée peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, la technique proposée est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en œuvre une fonction ou un ensemble de fonctions, selon ce qui est décrit ci-dessous pour le module concerné. Un tel composant logiciel est exécuté par un processeur de données d'une entité physique (terminal, serveur, passerelle, routeur, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en œuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Chaque composante du système précédemment décrit met bien entendu en œuvre ses propres modules logiciels.

Les différents modes de réalisation mentionnés ci-dessus sont combinables entre eux pour la mise en œuvre de la technique proposée.

### 4. Figures

D'autres caractéristiques et avantages de la technique proposée apparaîtront plus clairement à la lecture de la description suivante de différents modes de réalisation, donnés à titre de simples exemples illustratifs et non limitatifs, et des dessins annexés, parmi lesquels :
- la figure 1 décrit une architecture simplifiée d'un terminal de communication apte à être utilisé dans le cadre de la mise en œuvre de la technique proposée, selon un mode de réalisation particulier ;
- la figure 2 présente un diagramme de séquence d'un cas d'utilisation de la technique proposée, dans un mode de réalisation particulier ;
- la figure 3 illustre les étapes réalisées par un serveur de traitement de transactions pour la mise en œuvre de la technique proposée, dans un mode de réalisation particulier ;
- la figure 4 décrit une architecture simplifiée d'un serveur de traitement de transactions selon un mode de réalisation particulier de la technique proposée.

### 5. Description

La technique proposée ne présente pas au moins certains de ces problèmes de l'art antérieur. En effet, il est proposé ici un procédé de traitement d'une transaction effectuée en ligne, qui repose sur l'utilisation d'un terminal de communication pour l'obtention d'une autorisation de réalisation de ladite transaction. Ce terminal de communication dispose de moyens matériels et logiciels permettant d'assurer une sécurisation accrue de la transaction.

Le principe général de la technique proposée consiste à s'appuyer sur les mêmes mécanismes d'authentification que ceux mis en œuvre dans le cadre de la réalisation d'une transaction de paiement à partir d'une carte bancaire dans un mode « carte présente », et à reprendre ces mécanismes dans le but d'obtenir une autorisation pour la réalisation d'une transaction quelconque (pas seulement des transactions de paiement) à partir d'un terminal de communication. En d'autres termes, il est proposé une technique de traitement hybride, adaptée aux problèmes posés par les terminaux de communication, technique dans laquelle on retrouve une sécurisation renforcée des transactions réalisées à l'aide de terminaux de communication grâce à la saisie d'un code d'identification personnel. Cette technique comprend plusieurs volets : le provisionnement du terminal de communication, provisionnement consistant à fournir des données de cartes bancaires au terminal de communication ; la mise en œuvre d'une transaction. Les dispositifs permettant de mettre en œuvre les techniques décrites sont également présentés.

### 5.1 Provisionnement du terminal de communication

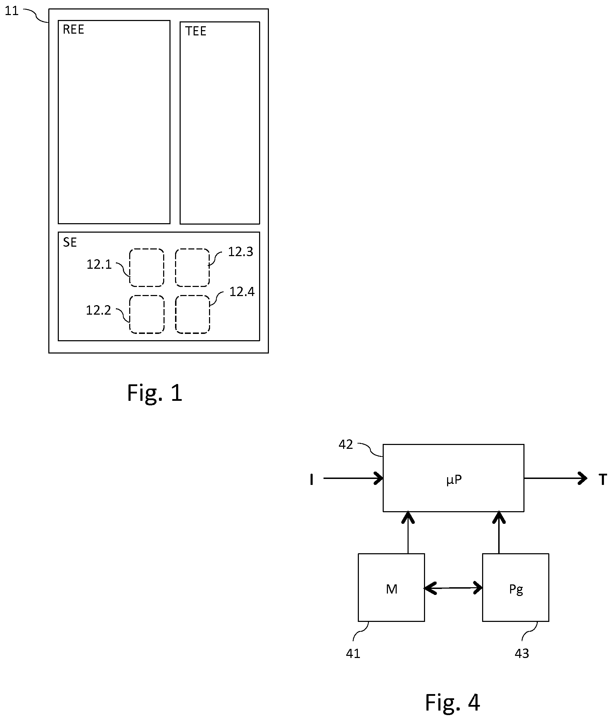

On présente, en relation avec la **figure 1****,** une architecture simplifiée d'un terminal de communication (11) apte à être utilisé dans le cadre de la mise en œuvre de la technique proposée, dans un mode de réalisation particulier. Un tel terminal de communication (11) comprend un processeur sécurisé ayant accès à une mémoire sécurisée. Ce processeur sécurisé et cette mémoire sécurisée sont éventuellement distincts du processeur central et de la mémoire centrale qui régissent le fonctionnement courant du terminal de communication (prise en charge d'appel, d'envoi de messages, navigation sur Internet, exécution d'application courantes, etc.), et qui sont la base de fonctionnement de l'environnement de fonctionnement courant (REE, de l'anglais « Rich Execution Environment ») du système d'exploitation installé sur le terminal de communication. Ce processeur et cette mémoire sécurisés - qui forment donc un espace sécurisé au sein du terminal de communication - peuvent par exemple être intégrés au sein d'un environnement d'exécution sécurisé (TEE, de l'anglais « Trusted Execution Environment ») qui est livré au fabricant de terminaux de communication. Alternativement, cet environnement d'exécution sécurisé prend la forme d'un mode spécifique d'exécution du processeur principal du terminal de communication.

Cet environnement d'exécution sécurisé est par ailleurs complété d'un module de sécurisation (SE, de l'anglais « Secure Element ») dont la fonction dans le cadre de la présente technique est de dialoguer avec un terminal de paiement virtuel. Plusieurs types de service (12), nécessitant l'obtention d'une autorisation pour la réalisation de transactions associées, sont prédéfinis au sein de ce module de sécurisation (SE) (par exemple au moyen de circuits intégrés dédiés aptes à exécuter des applications spécifiques, également appelées applets). Afin de permettre à un utilisateur de pouvoir réaliser des transactions de paiement, le module de sécurisation (SE) intègre par exemple des types de services de paiement prédéfinis correspondant aux différents schémas de paiement les plus répandus. On peut citer à titre illustratif mais non limitatif les schémas de paiement Visa^{®} et Mastercard^{®}. D'autres types de service qui ne sont pas nécessairement liés au domaine des transactions financières peuvent également être prédéfinis. (La figure 1 présente à titre d'exemple un module de sécurisation (SE) au sein duquel sont prédéfinis quatre types de service 12.1 à 12.4, mais cet exemple est purement illustratif : un module de sécurisation selon la technique proposée intègre au moins un type de service). Chaque type de service prédéfini au sein d'un module de sécurisation est associé à un identifiant unique (PAN_S), construit sur le même format qu'un numéro de carte bancaire (ou PAN, de l'anglais « Primary Account Number »). Un tel numéro comprend au moins seize chiffres : six premiers chiffres, qui constituent un numéro d'émetteur (ou IIN pour « Issuer Identification Number ») ; suivis d'un nombre variable de chiffres (souvent neuf chiffres et jusqu'à douze chiffres) identifiant la carte au sein de la banque ; et enfin un dernier chiffre de somme de contrôle. Chacun de ces identifiants (PAN_S) est non seulement unique au sein d'un même module de sécurisation, mais il est également unique au sein de l'ensemble des modules de sécurisation commercialisés. Ainsi, un tel module de sécurisation fourni à un fabricant de terminaux de communication contient, pour chaque type de service qui y est prédéfini, un identifiant qui fait office de signature unique et inaltérable et qui est construit sur le même format qu'un numéro de carte bancaire. Au sein de ce module de sécurisation, chaque type de service est stocké sous la même forme que le sont les données contenues dans une carte à mémoire de type carte bancaire (un type de service se comportant alors vis-à-vis de l'extérieur, comme une carte bancaire virtuelle avec son propre numéro (PAN_S)).

Lorsqu'un utilisateur prend possession d'un terminal de communication intégrant un tel module de sécurisation de transaction, il a la possibilité, dans une phase dite de provisionnement, d'activer certains de ces types de services, pour lesquels il souhaite être en mesure d'effectuer une transaction associée au moyen de son terminal de communication. Par exemple, si l'utilisateur souhaite pouvoir utiliser son téléphone pour réaliser des transactions de paiement, il va activer le type de service de paiement correspondant au type de carte en sa possession (par exemple « paiement VISA^{®} » ou « paiement Mastercard^{®} »). Si l'utilisateur souhaite utiliser son téléphone pour bénéficier d'une sécurisation accrue lors de certaines opérations réalisées sur un réseau social, il va activer le type de service associé à ce réseau social. Dans la suite du document, on s'intéresse (mais ce choix est donné à titre purement illustratif et n'est pas limitatif) au type de service correspondant à un paiement VISA^{®}.

Une fois le choix d'un type de service à activer effectué, la phase de provisionnement comprend une étape de fourniture des données associées au service particulier pour lequel une autorisation est requise lorsqu'une transaction est effectuée. Ainsi, si l'utilisateur souhaite pouvoir effectuer des paiements VISA^{®} à partir de son terminal de communication, il doit fournir dans cette phase de provisionnement les données associées à sa carte bancaire VISA^{®} qui sont utiles à la réalisation d'une transaction : numéro de carte bancaire, date d'expiration, nom du porteur, cryptogramme visuel, etc. Cette étape peut être réalisée par le biais d'une saisie manuelle des informations présentes sur la carte bancaire, ou de manière automatique, par exemple au moyen d'une photographie de la carte bancaire réalisée au moyen du terminal de communication (la quasi-totalité des terminaux de communication grand-public intègrent aujourd'hui des moyens pour prendre une photographie). Une donnée supplémentaire, dénommée « index » (IDX) est générée automatiquement par le terminal de communication, afin d'être en mesure de distinguer différents jeux de données propres à un même type de service (un utilisateur qui disposerait de plusieurs cartes bancaires VISA^{®} doit pouvoir provisionner chacune de ces cartes : l'identifiant unique du type de service (PAN_S) permet alors d'identifier non seulement un paiement VISA^{®} mais également l'utilisateur qui le demande (cet identifiant étant unique au sein de l'ensemble des modules de sécurisation), et l'index permet d'identifier le jeu de données associé à la carte bancaire VISA^{®} que l'utilisateur souhaite effectivement utiliser au moment d'un paiement à partir de son terminal de communication).

Les données sensibles associées à un service et fournies par l'utilisateur (numéro de carte bancaire, date d'expiration, nom du porteur, cryptogramme visuel, etc.) ne sont pas stockées au sein du terminal de communication : elle sont transmises à un serveur de traitement des transactions qui les stocke au sein d'une structure de données, dite structure de données de transactions (StrTrs), où elles sont associées à l'identifiant unique du type de service considéré (dans notre exemple considéré, le PAN_S du service « paiement VISA^{®} » pour le terminal de communication considéré), et à l'index généré automatiquement lors de leur fourniture. Les seules informations qui restent stockées au sein du terminal de communication (en plus des identifiants uniques PAN_S déjà prédéfinis au sein du module de sécurisation) sont l'index, ainsi qu'une représentation de la carte bancaire VISA^{®} provisionnée (par exemple une photographie, une image, et/ou les derniers chiffres de son numéro) qui sera utile ultérieurement pour permettre à l'utilisateur d'identifier plus facilement la carte qu'il souhaite utiliser (notamment si il a provisionné plusieurs cartes bancaires du même type).

Le provisionnement d'un service par la saisie de données et la transmission de ces données à un serveur de traitement des transactions est mis en œuvre sous le contrôle au moins partiel de l'environnement d'Exécution sécurisé (TEE) et/ou du module de sécurisation (SE). Les données sont transmises après l'établissement d'un canal sécurisé entre le terminal de communication et le serveur de traitement.

La demande d'activation d'un type de service donné auprès d'un serveur de traitement des transactions entraine en retour la transmission à l'utilisateur, via un canal de transmission sécurisé (par exemple directement par l'intermédiaire du canal sécurisé ou par un autre moyen comme la voie postale), d'un numéro d'identification personnel (PIN_S) (ou code PIN, de l'anglais « Personal Identification Number ») spécifiquement lié à l'identifiant unique du type de service activé (PAN_S) (ce numéro d'identification personnel n'est notamment pas celui qui est associé à la carte bancaire réelle de l'utilisateur). L'association entre l'identifiant unique du type de service activé (PAN_S) et le numéro d'identification personnel correspondant (PIN_S) est stockée au sein d'une structure de données, dite structure de données d'autorisation (StrAut), de ce serveur de traitement des transactions. Alternativement, tous les types de service prédéfinis au sein d'un même module de sécurisation peuvent être associés au même numéro d'identification personnel (PIN_S). Ceci permet de définir un numéro d'identification personnel global associé au terminal de communication, et l'utilisateur n'a alors qu'un seul numéro d'identification personnel à mémoriser (plutôt qu'un par type de service activé). Dans ce dernier cas, le numéro d'identification personnel associé au terminal de communication est par exemple généré puis transmis à l'utilisateur lors de sa toute première activation d'un type de service disponible, ou communiqué lors de l'acquisition du terminal de communication. Ce numéro d'identification personnel peut être intrinsèquement lié au terminal de communication (il est dans ce cas inaltérable et ne peut être changé pour un terminal de communication donné). Alternativement, il peut être généré de manière logicielle au niveau du serveur de traitement de transactions (il peut dans ce cas être renouvelé pour un terminal de communication donné). Alternativement, le numéro d'identification personnel peut être défini, lors de l'activation, par l'utilisateur lui-même et être ensuite transmis au serveur par l'environnement d'exécution sécurisé du terminal de communication.

La phase de provisionnement finalisée (au moins un type de service a été activé par l'utilisateur, et ce dernier a reçu le numéro d'identification personnel idoine), le procédé de traitement d'une transaction à partir d'un terminal de communication peut alors être mis en œuvre.

### 5.2 Traitement d'une transaction

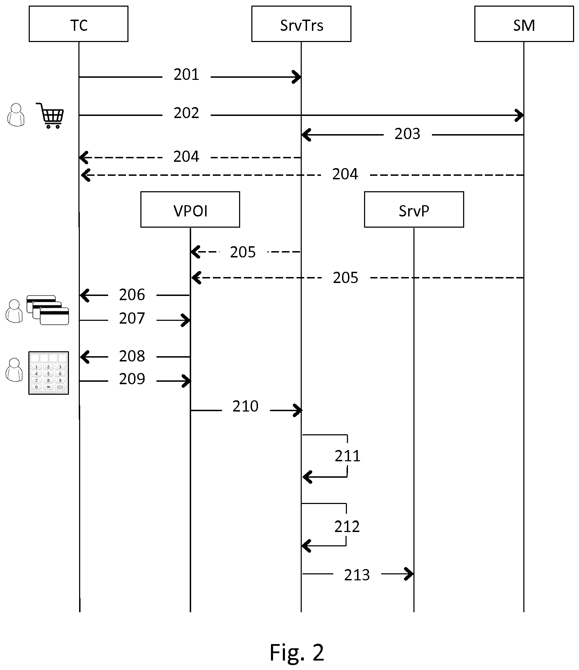

On décrit, en relation avec la **figure 2**, un premier cas d'utilisation correspondant à un paiement en ligne effectué à partir d'un terminal de communication mobile (TC) équipé d'un tel module de sécurisation (paiement de type m-commerce, de l'anglais « mobile commerce »). À titre illustratif, on suppose que l'utilisateur propriétaire du terminal de communication mobile (TC) (typiquement un smartphone ou une tablette) a préalablement activé, lors d'une phase de provisionnement telle que décrite précédemment, le type de service associé au paiement Visa^{®}, et qu'il a ainsi provisionné les données relatives à deux cartes bancaires Visa^{®} en sa possession.

Lorsque l'utilisateur met sous tension son terminal de communication mobile (TC), ce dernier émet (201) à destination d'un serveur de traitement de transactions (SrvTrs) une requête d'enregistrement. Cette requête d'enregistrement permet au serveur de traitement de transactions (SrvTrs) d'être informé de la disponibilité dudit terminal de communication (TC) pour la mise en œuvre de transactions selon un mode « carte présente ». A l'inverse, à la mise hors tension du terminal de communication, ce dernier est désinscrit du serveur de traitement de transactions (au moyen par exemple d'une requête d'annulation d'enregistrement émise par le terminal de communication juste avant son extinction, à destination dudit serveur de traitement de transactions). Alternativement, le terminal de communication sous tension peut également émettre régulièrement (à intervalle de temps donné) des requêtes de confirmation de disponibilité à destination du serveur de traitement de transactions. Tant que ce dernier reçoit ces requêtes, il considère que le terminal de communication est disponible pour la mise en œuvre de transaction selon la technique proposée.

A partir de son terminal de communication mobile, l'utilisateur se connecte à un site marchand (SM) (par exemple par le biais d'une application dédiée propre au site marchand, ou encore simplement par un accès au site Internet du marchand par le biais d'un navigateur), et y constitue un panier d'achats.

Lorsque l'utilisateur valide (202) son panier pour procéder au paiement, le site marchand (SM) informe (203) le serveur de traitement de transactions (SrvTrs) qu'une transaction est initialisée.

Le serveur de traitement de transactions (SrvTrs) (ou le serveur marchand SM) crée (204) alors un canal de communication sécurisé avec le terminal de communication (TC), puis il instancie (205), sur un serveur d'exécution au sein du réseau de communication, un terminal de paiement virtuel (VPOI) apte à échanger des informations avec ledit terminal de communication par le biais dudit canal de communication sécurisé. Lorsque le serveur marchand effectue l'instanciation, il ne le fait qu'après avoir reçu confirmation, par le serveur de traitement de transaction, que le terminal de communication de l'utilisateur est à même de mettre en œuvre une transaction avec un terminal de paiement virtuel.

On distingue deux catégories d'échanges : les échanges d'informations entre le terminal de paiement virtuel (VPOI) et l'environnement d'exécution sécurisé (TEE) du terminal de communication (TC) d'une part, et les échanges d'informations entre le terminal de paiement virtuel (VPOI) et le module de sécurisation (SE) du terminal de communication (TC) d'autre part. Les échanges entre le terminal de paiement virtuel (VPOI) et le module de sécurisation (SE) prennent la forme d'APDU (de l'anglais « Application Data Protocol Unit », qui définissent les messages échangés entre une carte à puce et un lecteur de carte à puce). Selon la technique proposée, le protocole de communication entre le module de sécurisation (SE) présent dans le terminal de communication (TC) mobile et le terminal de paiement virtuel (VPOI) instancié par le serveur de traitement des transactions est donc similaire à celui mis en œuvre lors des échanges entre une carte bancaire physique et un terminal de paiement physique. Le terminal de paiement virtuel (VPOI) émet des APDU de commande à destination d'une applet exécutée dans le module de sécurisation et associée au type de service considéré (par exemple l'applet « paiement Visa^{®} »), laquelle répond alors au terminal de paiement virtuel par le biais d'APDU de réponse. Le processus d'obtention d'une d'autorisation pour la réalisation d'une transaction à partir d'un terminal de communication s'apparente alors à celui qui est effectué lors d'une transaction de paiement en mode « carte présente » (le module de sécurisation du terminal de communication fait alors office de carte bancaire, au moyens d'au moins une des applets qui y sont installées, et le terminal de paiement virtuel se comporte comme un terminal de paiement classique).

A la validation du panier, le terminal de paiement virtuel (VPOI) instancié transmet (206) au terminal de communication une demande de présentation d'une carte de paiement. Lorsque plusieurs jeux de données (autrement dit plusieurs cartes virtuelles) ont été associés à un même type de service, l'environnement d'exécution sécurisé (TEE) se charge d'afficher les représentations des cartes virtuelles disponibles afin que l'utilisateur puisse en sélectionner une pour effectuer le paiement. Dans notre exemple, l'utilisateur a ainsi a sa disposition le choix entre deux cartes virtuelles Visa^{®} (associées par l'utilisateur au type de service « paiement Visa^{®} » lors de la phase de provisionnement). Ainsi, cette demande est destinée à l'environnement d'exécution sécurisé (TEE) du terminal de communication, qui est alors à même, par le biais d'une application dédiée, de présenter à l'utilisateur une représentation des cartes virtuelles à sa disposition en relation avec un type de services donné. Cette représentation - qui peut consister par exemple en une photographie, une image, ou encore un affichage des derniers chiffres du numéro de la carte bancaire réelle qu'elle représente - permet à l'utilisateur d'identifier la carte qu'il souhaite utiliser pour effectuer la transaction de paiement, et de la sélectionner. Ce choix effectué, le terminal de communication a donc connaissance du type de service associé à la transaction à réaliser (ici un paiement Visa^{®}), identifié de manière unique par son identifiant de type de service (PAN_S), ainsi que du jeu de données à utiliser associé audit type de service (ici le jeu de données associé à une des deux cartes Visa^{®} provisionnées par l'utilisateur), identifié par son index (IDX). Le module de sécurisation du terminal de communication transmet (207) ces informations - identifiant de type de service (PAN_S) et index représentatif d'un jeu de données à utiliser (IDX) - au terminal de paiement virtuel (VPOI), sous la forme d'un APDU, via l'applet appropriée qui est exécutée en son sein.

L'index représentatif d'un jeu de données à utiliser correspond à une donnée qui n'est généralement pas échangée dans le cadre d'une communication classique entre une carte bancaire physique et le terminal de paiement physique : en effet, dans cette situation, il n'y a normalement jamais d'incertitude sur la carte bancaire (et donc le jeu de données) à utiliser, puisque la carte en question est physiquement insérée dans le lecteur (ou physiquement approchée du lecteur si le paiement s'effectue sans contact). Dans le cadre de la technique proposée, la transmission d'un tel index au terminal de paiement virtuel (VPOI) s'avère cependant utile. En effet, l'identifiant du type de service (PAN_S) n'identifie, comme son nom l'indique, qu'un type de service. Puisqu'un terminal de communication peut contenir plusieurs cartes virtuelles associées à un même type de service, cette information (PAN_S) ne suffit pas à elle-seule à identifier la carte virtuelle à utiliser, et l'index du jeu de données à utiliser doit être transmis également. Afin de transmettre cet index au terminal de paiement virtuel (VPOI) tout en respectant le cadre d'un message APDU, il est stocké dans un champ disponible - par exemple le champ 9F10 - du message APDU.

Ce problème ne se pose pas pour l'identifiant de type de service (PAN_S), qui est construit sur le modèle d'un numéro de carte bancaire classique, et donc pleinement compatible avec des échanges de type APDU.

Ces informations reçues (PAN_S, IDX), le terminal de paiement virtuel (VPOI) transmet (208) ensuite au terminal de communication une commande de lancement d'une application de saisie d'un numéro d'identification personnel (code PIN). Cette application - qui présente à l'utilisateur une interface de saisie d'un code PIN - est exécutée au sein de l'environnement d'exécution sécurisé (TEE) du terminal de communication, et elle est à ce titre en dehors du périmètre d'action du système d'exploitation installé sur le terminal de communication (TC). Elle ne peut donc pas faire l'objet de manipulations ou d'altérations de la part de programmes malveillants potentiellement présents sur le terminal de communication de l'utilisateur, ce qui garantit une sécurisation maximale de la transaction. Tout comme il l'aurait fait dans le cadre d'une utilisation classique de sa carte bancaire physique insérée dans un terminal de paiement physique - autrement dit lors d'une transaction classique en mode « carte présente » - l'utilisateur saisi alors le numéro d'identification personnel (également dénommé code PIN) qui lui a été communiqué lors de la phase de provisionnement, ou lors de l'acquisition du terminal de communication mobile. Selon les modes de réalisation de la technique proposée, il peut s'agir d'un numéro d'identification personnel propre à un type de service activé, ou encore d'un numéro d'identification personnel associé au terminal de communication lui-même (et donc commun à tous les types de services prédéfinis en son sein). On rappelle que ce numéro d'identification personnel selon la technique proposée ne correspond en aucun cas au code PIN associé à une quelconque carte bancaire physique de l'utilisateur, tout comme le fait que l'identifiant de type de service (PAN_S) - bien que respectant le formalisme d'un numéro de carte bancaire - ne correspond en aucun cas au numéro d'une carte bancaire physique en possession de l'utilisateur.

Ce numéro d'identification personnel (PIN) saisi est transmis (209) chiffré au terminal de paiement virtuel (VPOI), qui le relaie (210) au serveur de traitement de transactions ou au serveur marchand, selon le serveur à l'origine de l'instanciation du terminal de paiement virtuel (dans ce cas le serveur marchand relaie la transmission au serveur de traitement de transactions).

Le serveur de transactions vérifie (211) alors, au moyen de la structure de données d'autorisation (StrAut) qui associe l'identifiant d'un type de service (PAN_S) au numéro d'identification personnel attendu pour ce service (PIN_S), que le numéro d'identification personnel saisi par l'utilisateur (PIN) est bien identique avec celui attendu pour le type de services considéré.

Si c'est le cas, la transaction est autorisée. Le serveur de traitement de transactions récupère (212) alors, au moyen de la structure de données de transactions et en fonction de l'identifiant du type de service (PAN_S) et de l'index de la carte virtuelle à utiliser (IDX), le jeu de données (JD) associé à cette carte virtuelle qui va permettre de réaliser la transaction. Dans le cadre d'une transaction de paiement, ce jeu de données est par exemple constitué des informations utiles à la réalisation d'une transaction de paiement en mode « carte non présente » : numéro de la carte bancaire réelle, date d'expiration, cryptogramme visuel, éventuellement le nom du porteur, etc. Une fois récupérées, le serveur de traitement de transactions transmet (213) ces informations (ainsi que d'autres informations complémentaires utiles pour la réalisation de la transaction, par exemple le montant à payer dans le cadre d'une transaction financière) à un serveur tiers (SrvP) qui se charge de finaliser la transaction (par exemple un serveur de paiement dans le cas d'une transaction de paiement).

Le mécanisme détaillé ci-dessus peut également s'appliquer à d'autres cas d'utilisation, notamment celui où l'utilisateur a à sa portée son terminal de communication intégrant le module de sécurisation et les cartes virtuelles qu'il y a provisionnées, mais navigue sur le site marchand à partir d'un autre dispositif de communication complémentaire, par exemple un ordinateur (situation de type e-commerce). Dans ce cas, une identification de l'utilisateur sur le site marchand, requise pour valider un panier d'achat, est transmise au serveur de transactions, qui peut alors déterminer si un terminal de communication de l'utilisateur est enregistré. Si c'est le cas, le reste de la transaction se poursuit de la même manière que si elle avait été initiée à partir du terminal de communication mobile de l'utilisateur : le choix de la carte à utiliser et la saisie du numéro d'identification personnel sont réalisés à partir du terminal de communication intégrant le module de sécurisation, et non pas à partir du dispositif de communication complémentaire. Ce cas d'usage est particulièrement intéressant car il permet à l'utilisation de bénéficier d'une sécurisation accrue du traitement de la transaction, même lorsque le dispositif de communication complémentaire ne lui appartient pas et est susceptible d'être peu sécurisé voire compromis (ordinateur d'un tiers, ordinateur mis à disposition dans un lieu public tel qu'une médiathèque, etc.).

### 5.3 Modes de réalisation du procédé de traitement d'une transaction

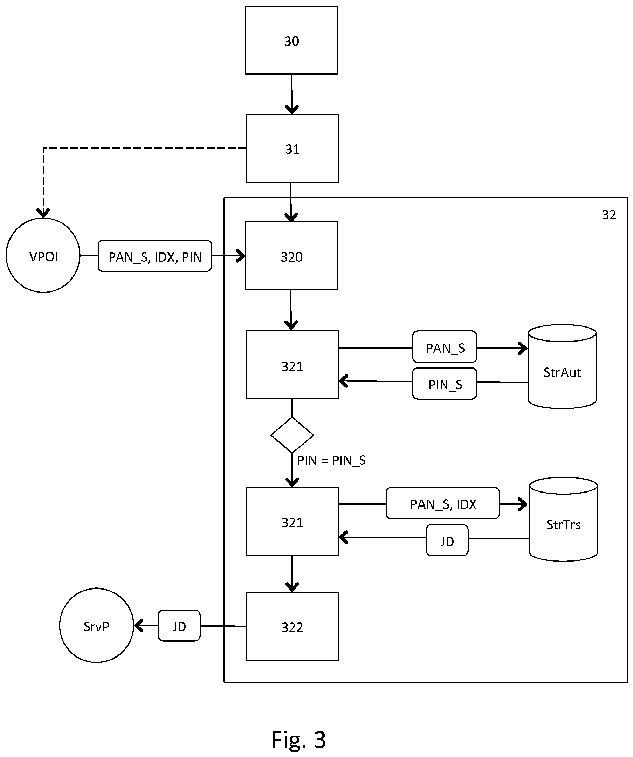

On présente, en relation avec la **figure 3****,** les étapes réalisées au niveau du serveur de traitement des transactions, dans le cadre de la mise en œuvre du procédé de traitement d'une transaction selon un mode de réalisation particulier de la technique proposée. Ce procédé de traitement d'une transaction comprend :
- une étape de création (30) d'un canal de communication sécurisé avec le terminal de communication (TC) ;
- une étape d'instanciation (31) d'un terminal de paiement virtuel (VPOI) apte à échanger des informations avec ledit terminal de communication par le biais dudit canal de communication sécurisé ;
- une étape de réception (320), en provenance dudit terminal de paiement virtuel (VPOI), de l'identifiant du type de service (PAN_S) correspondant à la transaction à réaliser à partir dudit terminal de communication, de l'index (IDX) correspondant au jeu de données à utiliser pour réaliser ladite transaction, et d'un numéro d'identification personnel (PIN) saisi ;
- une étape de vérification (321) de l'adéquation entre ledit numéro d'identification personnel saisi (PIN) et le numéro d'identification personnel attendu (PIN_S) pour le type de service considéré (PAN_S), au moyen de la structure de données d'autorisation (StrAut) ;
- lorsque ladite vérification est positive, une étape d'obtention (322) des données (JD) utiles à la poursuite de la transaction, au moyen de la structure de données de transactions (StrTrs), en fonction de l'identifiant dudit type de service (PAN_S) correspondant à la transaction à réaliser à partir dudit terminal de communication, et dudit index (IDX) correspondant au jeu de données à utiliser ;
- une étape de transmission (323) dudit jeu de données (JD) à un serveur tiers (SrvP) apte à réaliser la transaction.

Ainsi, le serveur de traitement de transactions est apte à instancier un terminal de paiement virtuel apte à communiquer avec un module de sécurisation d'un terminal de communication selon un protocole similaire à celui mis en œuvre lors des échanges entre une carte bancaire physique et un terminal de paiement physique. Les informations obtenues par le terminal de paiement virtuel (VPOI) sont communiquées au serveur de traitement de transactions, qui peut ainsi évaluer si la transaction peut être autorisée ou non, et le cas échéant communiquer à un serveur tiers les données pour sa réalisation.

Dans un mode de réalisation particulier, le procédé de traitement d'une transaction comprend, préalablement à l'étape de création (30) d'un canal de communication sécurisé avec le terminal de communication (TC), une étape de réception d'au moins une requête d'enregistrement dudit terminal de communication (TC) auprès dudit serveur de traitement de transactions. Ainsi, le serveur de traitement de transactions est à même de déterminer si un terminal de communication est effectivement sous tension et donc disponible pour participer à la mise en œuvre du traitement d'une transaction selon la technique proposée.

Dans encore un mode de réalisation particulier, le procédé de traitement d'une transaction comprend, préalablement à l'étape de création (30) d'un canal de communication sécurisé avec le terminal de communication (TC), une étape de réception d'une requête d'initialisation d'une transaction, en provenance d'un serveur marchand. Le serveur marchand héberge par exemple un site marchand au bénéfice duquel une transaction de paiement doit être réalisée, ou tout autre service offrant la possibilité de réaliser des transactions pour lesquelles une autorisation est requise. ;

Dans un mode de réalisation particulier de la technique proposée, en cas de vérification négative de l'adéquation entre le numéro d'identification personnel saisi (PIN) et le numéro d'identification personnel attendu (PIN_S) pour le type de service considéré, le terminal de paiement virtuel (VPOI) peut inviter l'utilisateur à ressaisir son numéro d'identification personnel. Le nombre de tentatives infructueuses peut être comptabilisé, et le serveur de traitement de transactions peut décider de rejeter définitivement la transaction au-delà d'un certain nombre de saisies erronées (par exemple trois).

Dans un mode de réalisation particulier de la technique proposée, le numéro d'identification personnel saisi par l'utilisateur est crypté ou est transformé par une fonction de hachage au sein du terminal de communication ou du terminal de paiement virtuel, avant d'être transmis au serveur de traitement des transactions. La vérification de l'adéquation entre le numéro d'identification personnel saisi (PIN) et le numéro d'identification personnel attendu (PIN_S) pour le type de service considéré est alors réalisé après décryptage du numéro d'identification personnel crypté reçu (cas du cryptage), ou sur la base d'une comparaison d'empreintes (cas du hachage).

Dans l'exemple développé précédemment au long de ce document - la réalisation d'une transaction de paiement à partir d'un terminal de communication - il est intéressant de noter que la technique proposée permet la mise en œuvre d'un mode de transaction hybride faisant intervenir à la fois une partie des mécanismes mis en œuvre dans le cadre d'une transaction de paiement en mode « carte présente » et une partie de ceux mis en œuvre dans le cadre d'une transaction en mode « carte non présente » :
- l'obtention de l'autorisation de réaliser une transaction est obtenue selon des mécanismes analogues à ceux mis en œuvre lors de la réalisation d'une transaction en mode « carte présente », et qui garantissent une sécurisation accrue de la transaction ;
- néanmoins, une fois cette autorisation obtenue, les mêmes mécanismes que ceux mis en œuvre lors de la réalisation d'une transaction en mode « carte non présente » sont utilisés pour finaliser la transaction, à savoir la transmission des informations telles qu'inscrites sur une carte bancaire (numéro de carte, date d'expiration, cryptogramme visuel, nom du porteur) à un serveur de paiement. Ces informations sont récupérés dans la structure de données de transactions (StrTrs) du serveur de traitement des transactions, à partir de l'identifiant du type de service (PAN_S) pour lequel on souhaite effectuer une transaction, et de l'index (IDX) servant à identifier le jeu de données à utiliser pour finaliser cette transaction.

Selon un autre aspect de la technique proposée, un terminal de communication tel que celui décrit dans la présente demande - qui inclut un module de sécurisation au sein duquel sont prédéfinis des types de service, et notamment des types de service de paiement correspondant à différents schémas de paiement de cartes bancaires, à même d'être provisionnés - peut être utilisé pour la réalisation d'une transaction de paiement sans contact en lien avec un terminal de paiement physique (et non plus un terminal de paiement virtuel) (Dans ce cas, le terminal de communication et le terminal de paiement doivent comprendre des moyens de communication sans contact adaptés à ce type d'usage, par exemple des moyens de communication en champ proche (NFC). Le procédé mis en œuvre est le même que celui décrit préalablement. Le seul changement consiste à mettre en œuvre un terminal de paiement physique à la place d'un terminal de paiement virtuel. Les APDU échangés entre le terminal de communication (SE) et le terminal de paiement sont alors transportés par un protocole de transport basé sur NFC plutôt qu'en utilisant le protocole IP.

### 5.4 Dispositifs associés

On décrit, en relation avec la **figure 4**, un serveur de traitement de transactions comprenant des moyens permettant l'exécution du procédé de traitement de transactions décrit préalablement. Ainsi, un tel serveur de traitement de transactions comprend :
- des moyens de création d'un canal de communication sécurisé avec ledit terminal de communication ;
- des moyens d'instanciation, au sein d'un serveur d'exécution sur ledit réseau de communication, d'un terminal de paiement virtuel (VPOI) apte à échanger des informations avec ledit terminal de communication par le biais dudit canal de communication sécurisé ;
- des moyens de traitement de transaction entre le terminal de communication et ledit terminal de paiement virtuel (VPOI) mettant en œuvre au moins un module de sécurisation dudit terminal de communication, ledit module de sécurisation étant configuré pour échanger un identifiant du type de service.

Par exemple, le serveur de traitement de transactions comprend une mémoire 41 constituée d'une mémoire tampon, une unité de traitement 42, équipée par exemple d'un microprocesseur, et pilotée par le programme d'ordinateur 43, mettant en œuvre les étapes nécessaires au traitement d'une transaction selon la technique proposée.

À l'initialisation, les instructions de code du programme d'ordinateur 43 sont par exemple chargées dans une mémoire avant d'être exécutées par le processeur de l'unité de traitement 42. L'unité de traitement 42 reçoit en entrée (I) par exemple une requête d'initialisation d'une transaction en provenance d'un serveur partenaire (par exemple un site marchand). Le microprocesseur de l'unité de traitement 42 met en œuvre les étapes du procédé, selon les instructions du programme d'ordinateur 43 pour permettre le traitement de la transaction, et notifie en sortie (T) une décision d'autorisation ou de rejet d'une transaction.

Pour cela, le serveur intermédiaire comprend, outre la mémoire tampon 41, des moyens de transmission/réception de données qui peuvent se matérialiser sous la forme d'une interface de connexion à un ou plusieurs réseaux de communication, ces moyens permettant éventuellement d'établir une liaison avec des terminaux de communication mobiles ou des serveurs partenaires. Il peut s'agir d'interfaces logicielles ou d'interfaces matérielles (de type carte réseau ou modules matériels de communication réseau). Selon l'invention, un tel serveur comprend en outre des moyens de stockage qui peuvent prendre la forme d'une base de données, ou un accès à de tels moyens de stockage. Ces moyens de stockage comprennent notamment la structure de données qui héberge les associations entre identifiants de type de service et numéros d'identification personnel correspondants d'une part, et la structure de données qui héberge les associations entre identifiants de type de service, index et jeux de données à utiliser pour réaliser une transaction d'autre part.

La technique proposée se rapporte également à un terminal de communication comprenant des moyens de provisionnement d'une carte virtuelle représentative d'une carte bancaire d'un utilisateur, ledit terminal de communication comprenant :
- des moyens de sélection d'un type de service auquel ladite carte virtuelle doit être associée, parmi un ensemble de types de services prédéfinis au sein dudit terminal de communication ;
- des moyens d'obtention d'un jeu de données associées à ladite carte bancaire ;
- des moyens d'enregistrement d'une représentation de ladite carte bancaire, ladite représentation appartenant au groupe comprenant :
   - une photo de ladite carte bancaire ;
   - une représentation imagée de ladite carte bancaire ;
   - un sous-ensemble du numéro de ladite carte bancaire ;
   - de moyens de génération et de stockage d'un index (IDX) associé audit jeu de données.

## Revendications

1. Procédé de traitement, par un serveur de traitement de transactions, d'une transaction initiée au moins partiellement à partir d'un terminal de communication connectable audit serveur par l'intermédiaire d'un réseau de communication, procédé **caractérisé en ce qu'**il comprend :
- une étape de création (30) d'un canal de communication sécurisé avec le terminal de communication ;
- une étape d'instanciation (31), au sein d'un serveur d'exécution sur ledit réseau de communication, d'un terminal de paiement virtuel (VPOI) apte à échanger des informations avec ledit terminal de communication par le biais dudit canal de communication sécurisé ;
- une étape de réception (320), en provenance dudit terminal de paiement virtuel (VPOI), d'un identifiant (PAN_S) représentatif du type de ladite transaction à traiter, d'un index (IDX) représentatif d'un jeu de données utile au traitement de ladite transaction, et d'un numéro d'identification personnel (PIN) saisi sur ledit terminal de communication;
- une étape de vérification (321) de l'adéquation entre ledit numéro d'identification personnel (PIN) saisi et un numéro d'identification personnel attendu (PIN_S) pour ledit type de transaction à traiter (PAN_S) ;
- lorsque ladite vérification est positive, une étape d'obtention (322) des données (JD) utiles à la poursuite de la transaction, en fonction dudit identifiant représentatif du type de ladite transaction à traiter (PAN_S) et dudit index (IDX) représentatif d'un jeu de données utile au traitement de ladite transaction;
- une étape de transmission (323) dudit jeu de données (JD) à un serveur tiers (SrvP) apte à réaliser la transaction.

2. Procédé de traitement d'une transaction selon la revendication 1, **caractérisé en ce qu'**il comprend, préalablement à l'étape de création (30) d'un canal de communication sécurisé avec le terminal de communication (TC), une étape de réception d'au moins une requête d'enregistrement dudit terminal de communication (TC) auprès dudit serveur de traitement de transactions.

3. Procédé de traitement d'une transaction selon la revendication 1, **caractérisé en ce qu'**il comprend, préalablement à l'étape de création (30) d'un canal de communication sécurisé avec le terminal de communication (TC), une étape de réception d'une requête d'initialisation le la transaction, en provenance d'un serveur marchand.

4. Serveur de traitement de transactions initiées au moins partiellement à partir d'un terminal de communication connecté audit serveur par l'intermédiaire d'un réseau de communication, serveur **caractérisé en ce qu'**il comprend :
- des moyens de création d'un canal de communication sécurisé avec ledit terminal de communication ;
- des moyens d'instanciation, au sein d'un serveur d'exécution sur ledit réseau de communication, d'un terminal de paiement virtuel (VPOI) apte à échanger des informations avec ledit terminal de communication par le biais dudit canal de communication sécurisé ;
- des moyens de réception, en provenance dudit terminal de paiement virtuel (VPOI), d'un identifiant (PAN_S) représentatif du type de ladite transaction à traiter, d'un index (IDX) représentatif d'un jeu de données utile au traitement de ladite transaction, et d'un numéro d'identification personnel (PIN) saisi sur ledit terminal de communication;
- des moyens de vérification de l'adéquation entre ledit numéro d'identification personnel (PIN) saisi et un numéro d'identification personnel attendu (PIN_S) pour ledit type de transaction à traiter (PAN_S) ;
- des moyens d'obtention des données (JD) utiles à la poursuite de la transaction, en fonction dudit identifiant représentatif du type de ladite transaction à traiter (PAN_S) et dudit index (IDX) représentatif d'un jeu de données utile au traitement de ladite transaction, lesdits moyens d'obtention étant mis en œuvre lorsque ladite vérification est positive ;
- des moyens de transmission dudit jeu de données (JD) à un serveur tiers (SrvP) apte à réaliser la transaction.

5. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution d'un procédé de traitement de transaction selon l'une quelconque des revendications 1 à 4, lorsqu'il est exécuté sur un ordinateur.

6. Procédé de provisionnement d'une carte virtuelle au sein d'un terminal de communication, ladite carte virtuelle étant issue d'une carte bancaire d'un utilisateur dudit terminal de communication, procédé **caractérisé en ce qu'**il comprend :
- une étape de sélection d'un type de service auquel ladite carte virtuelle doit être associée, parmi un ensemble de types de services, nécessitant l'obtention d'une autorisation pour la réalisation de transactions associées, et prédéfinis au sein d'un module de sécurisation dudit terminal de communication, chaque type de service prédéfini étant associé à une applet correspondante installée au sein dudit module de sécurisation ;
- une étape d'obtention d'un jeu de données utile au traitement d'une transaction, issu de ladite carte bancaire ;
- une étape d'enregistrement d'une représentation de ladite carte bancaire, ladite représentation appartenant au groupe comprenant :
- une photo de ladite carte bancaire ;
- une représentation imagée de ladite carte bancaire ;
- un sous-ensemble du numéro de ladite carte bancaire ;
- une étape de génération et de stockage d'un index (IDX) représentatif dudit jeu de données utile au traitement d'une transaction, pour ledit type de service sélectionné ;
- et lorsque d'une transaction initiée au moins partiellement à partir du terminal de communication;
- une étape de création (30) d'un canal de communication sécurisé avec un serveur de traitement de transactions par l'intermédiaire d'un réseau de communication;
- une étape de transmission, à destination d'un terminal de paiement virtuel (VPOI) instancié au sein d'un serveur d'exécution sur ledit réseau de communication, par le biais dudit canal de communication sécurisé, d'un identifiant (PAN_S) représentatif dudit type de transaction à traiter, dudit index (IDX) représentatif dudit jeu de données utile au traitement de ladite transaction et d'un numéro d'identification personnel (PIN) saisi sur ledit terminal de communication.

7. Terminal de communication comprenant des moyens de mettre en œuvre les étapes du procédé selon la revendication 6.

8. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution d'un procédé de provisionnement d'une carte virtuelle selon la revendication 6, lorsqu'il est exécuté sur un ordinateur.

## Patentansprüche

1. Verfahren zur Verarbeitung, durch einen Transaktionsverarbeitungsserver, einer Transaktion, die zumindest teilweise von einem Kommunikationsendgerät initiiert wird, das an den Server über ein Kommunikationsnetz angeschlossen werden kann, wobei das Verfahren **dadurch gekennzeichnet ist, dass** es umfasst:
- einen Schritt der Schaffung (30) eines gesicherten Kommunikationskanals mit dem Kommunikationsendgerät;
- einen Schritt der Instantiierung (31), innerhalb eines Ausführungsservers, eines virtuellen Zahlungsendgeräts (VPOI), das geeignet ist, Informationen mit dem Kommunikationsendgerät über den gesicherten Kommunikationskanal auszutauschen;
- einen Schritt des Empfangs (320), von dem virtuellen Zahlungsendgerät (VPOI), eines Identifikators (PAN_S), der für den Typ der zu verarbeitenden Transaktion repräsentativ ist, eines Index (IDX), der für einen Datensatz, der für die Verarbeitung der Transaktion nützlich ist, repräsentativ ist, und einer persönlichen Identifikationsnummer (PIN), die am Kommunikationsendgerät eingegeben wird;
- einen Schritt der Überprüfung (321) der Entsprechung zwischen der eingegebenen persönlichen Identifikationsnummer (PIN) und einer für den zu verarbeitenden Transaktionstyp (PAN_S) erwarteten persönlichen Identifikationsnummer (PIN_S);
- wenn die Überprüfung positiv ist, einen Schritt des Erhalts (322) der für die Fortsetzung der Transaktion nützlichen Daten (JD) in Abhängigkeit von dem für den zu verarbeitenden Transaktionstyp (PAN_S) repräsentativen Identifikator und dem Index (IDX), der für den für die Verarbeitung der Transaktion nützlichen Datensatz repräsentativ ist;
- einen Schritt der Übertragung (323) des Datensatzes (JD) an einen Drittserver (SrvP), der geeignet ist, die Transaktion durchzuführen.

2. Verfahren zur Verarbeitung einer Transaktion nach Anspruch 1, **dadurch gekennzeichnet, dass** es vor dem Schritt der Schaffung (30) eines gesicherten Kommunikationskanals mit dem Kommunikationsendgerät (TC) einen Schritt des Empfangs mindestens einer Registrierungsanfrage vom Kommunikationsendgerät (TC) beim Transaktionsverarbeitungsserver umfasst.

3. Verfahren zur Verarbeitung einer Transaktion nach Anspruch 1, **dadurch gekennzeichnet, dass** es vor dem Schritt der Schaffung (30) eines gesicherten Kommunikationskanals mit dem Kommunikationsendgerät (TC) einen Schritt des Empfangs einer Initialisierungsanfrage der Transaktion von einem Händlerserver umfasst.

4. Server zur Verarbeitung von Transaktionen, die zumindest teilweise von einem Kommunikationsendgerät initiiert werden, das an den Server über ein Kommunikationsnetz angeschlossen ist, wobei der Server **dadurch gekennzeichnet ist, dass** er umfasst:
- Mittel zur Schaffung eines gesicherten Kommunikationskanals mit dem Kommunikationsendgerät;
- Mittel zur Instantiierung, innerhalb eines Ausführungsservers, eines virtuellen Zahlungsendgeräts (VPOI), das geeignet ist, Informationen mit dem Kommunikationsendgerät über den gesicherten Kommunikationskanal auszutauschen;
- Mittel zum Empfang, von dem virtuellen Zahlungsendgerät (VPOI), eines Identifikators (PAN S), der für den Typ der zu verarbeitenden Transaktion repräsentativ ist, eines Index (IDX), der für einen Datensatz, der für die Verarbeitung der Transaktion nützlich ist, repräsentativ ist, und einer persönlichen Identifikationsnummer (PIN), die am Kommunikationsendgerät eingegeben wird;
- Mittel zur Überprüfung der Entsprechung zwischen der eingegebenen persönlichen Identifikationsnummer (PIN) und einer für den zu verarbeitenden Transaktionstyp (PAN_S) erwarteten persönlichen Identifikationsnummer (PIN_S);
- Mittel zum Erhalt der für die Fortsetzung der Transaktion nützlichen Daten (JD) in Abhängigkeit von dem für den zu verarbeitenden Transaktionstyp (PAN_S) repräsentativen Identifikator und dem Index (IDX), der für den für die Verarbeitung der Transaktion nützlichen Datensatz repräsentativ ist, wobei die Mittel zum Erhalt eingesetzt werden, wenn die Überprüfung positiv ist;
- Mittel zur Übertragung des Datensatzes (JD) an einen Drittserver (SrvP), der geeignet ist, die Transaktion durchzuführen.

5. Computerprogrammprodukt, das von einem Kommunikationsnetz downgeloadet und/oder auf einem von einem Computer lesbaren Träger gespeichert und/oder von einem Mikroprozessor ausgeführt werden kann, **dadurch gekennzeichnet, dass** es Programmcodebefehle für die Ausführung eines Verfahrens zur Verarbeitung einer Transaktion nach einem der Ansprüche 1 bis 4, wenn es auf einem Computer ausgeführt wird, umfasst.

6. Verfahren zum Zuführen einer virtuellen Karte in einem Kommunikationsendgerät, wobei die virtuelle Karte von einer Bankkarte eines Benutzers des Kommunikationsendgeräts stammt, wobei das Verfahren **dadurch gekennzeichnet ist, dass** es umfasst:
- einen Schritt der Auswahl eines Dienstleistungstyps, dem die virtuelle Karte zugeordnet werden soll, unter einer Gesamtheit von Dienstleistungstypen, die den Erhalt einer Genehmigung für die Durchführung der zugehörigen Transaktionen benötigen und in einem Sicherungsmodul des Kommunikationsendgeräts vordefiniert sind, wobei jeder vordefinierte Dienstleistungstyp einem entsprechenden Applet zugeordnet ist, das in dem Sicherungsmodul installiert ist;
- einen Schritt des Erhalts eines für die Verarbeitung einer Transaktion nützlichen Datensatzes, der von der Bankkarte stammt;
- einen Schritt der Registrierung einer Präsentation der Bankkarte, wobei die Präsentation der Gruppe angehört, umfassend:
- ein Foto der Bankkarte;
- eine bildhafte Präsentation der Bankkarte;
- eine Untergruppe der Nummer der Bankkarte;
- einen Schritt der Erstellung und Speicherung eines Index (IDX), der für den für die Verarbeitung einer Transaktion nützlichen Datensatz für den ausgewählten Dienstleistungstyp repräsentativ ist;
- und bei einer zumindest teilweise vom Kommunikationsendgerät initiierten Transaktion:
- einen Schritt der Schaffung (30) eines gesicherten Kommunikationskanals mit einem Server zur Verarbeitung von Transaktionen über ein Kommunikationsnetz;
- in Richtung eines virtuellen Zahlungsendgeräts (VPOI), das in einem Ausführungsserver in dem Kommunikationsnetz instantiiert ist, einen Schritt der Übertragung, über den gesicherten Kommunikationskanal, eines Identifikators (PAN_S), der für den zu verarbeitenden Transaktionstyp repräsentativ ist, des Index (IDX), der für den für die Verarbeitung der Transaktion nützlichen Datensatz repräsentativ ist, und einer persönlichen Identifikationsnummer (PIN), die am Kommunikationsendgerät eingegeben wird.

7. Kommunikationsendgerät, umfassend Mittel für den Einsatz der Schritte des Verfahrens nach Anspruch 6.

8. Computerprogrammprodukt, das von einem Kommunikationsnetz downgeloadet werden kann und/oder auf einem von einem Computer lesbaren Träger gespeichert ist und/oder von einem Mikroprozessor ausführbar ist, **dadurch gekennzeichnet, dass** es Programmcodebefehle für die Ausführung eines Verfahrens zum Zuführen einer virtuellen Karte nach Anspruch 6 umfasst, wenn es auf einem Computer ausgeführt wird.

## Claims

1. Method for the processing, by a transaction-processing server, of a transaction at least partially initiated from a communications terminal connectable to said server by means of a communications network, method **characterized in that** it comprises:
- a step (30) for creating a secured communications channel with the communications terminal;
- a step (31) of instantiation, within an execution server on said communications network, of a virtual payment terminal (VPOI) capable of exchanging information with said communications terminal by means of said secured communications channel;
- a step (320) of reception, from said virtual payment terminal (VPOI), of an identifier (PAN_S) representing the type of said transaction to be processed, an index (IDX) representing a set of data useful for the processing of said transaction, and a personal identification number (PIN) entered into said communications terminal;
- a step (321) for verifying that there is a match between said personal identification number (PIN) entered and a personal identification number (PIN_S) expected for said type of transaction to be processed (PAN_S);
- when said verification is positive, a step (322) for obtaining data (JD) for the continuance of the transaction, as a function of said identifier (PAN_S) representing the type of said transaction to be processed and said index (IDX) representing a set of data useful for the processing of said transaction;;
- a step (323) for transmitting said set of data (JD) to a third-party server (SrvP) capable of carrying out the transaction.

2. Method for processing a transaction according to claim 1, **characterized in that** it comprises, prior to the step (30) for creating a secured communications channel with the communications terminal (TC), a step for receiving at least one request for registering said communications terminal (TC) with said transaction-processing server.

3. Method for processing a transaction according to claim 1, **characterized in that** it comprises, prior to the step (30) for creating a secured communications channel with the communications terminal (TC), a step for receiving a request for initializing the transaction, coming from a merchant server.

4. Server for processing transactions at least partially initiated from a communications terminal connected to said server by means of a communications network, server **characterized in that** it comprises:
- means for creating a secured communications channel with said communications terminal;
- means of instantiation, within an execution server on said communications network, of a virtual payment terminal (VPOI) capable of exchanging information with said communications terminal by means of said secured communications channel;
- means for receiving, from said virtual payment terminal (VPOI), of an identifier (PAN_S) representing the type of said transaction to be processed, an index (IDX) representing a set of data useful for the processing of said transaction, and a personal identification number (PIN) entered into said communications terminal;
- means for verifying that there is a match between said personal identification number (PIN) entered and a personal identification number (PIN_S) expected for said type of transaction to be processed (PAN_S);
- means for obtaining data (JD) for the continuance of the transaction, as a function of said identifier (PAN_S) representing the type of said transaction to be processed and said index (IDX) representing a set of data useful for the processing of said transaction, said means for obtaining being operated when said verification is positive;
- means for transmitting said set of data (JD) to a third-party server (SrvP) capable of carrying out the transaction.

5. Computer program product downloadable from a communications network and/or stored on a carrier readable by a computer and/or executable by a microprocessor, **characterized in that** it comprises program code instructions for executing a transaction-processing method according to any one of the claims 1 to 4, when it is executed on a computer.

6. Method for provisioning a virtual card within a communications terminal, said virtual card being derived from a bank card of a user of said communications terminal, method **characterized in that** it comprises:
- a step for selecting a type of service with which said virtual card must be associated, from among a set of types of services requiring the obtention of an authorization for the processing of associated transactions, and pre-defined within a securing module of said communications terminal, each pre-defined type of service being associated with a corresponding applet installed within said securing module;
- a step for obtaining a set of data useful for the processing of a transaction, coming from said bank card;
- a step for registering a representation of said bank card, said representation belonging to the group comprising:
- a photograph of said bank card;
- an image representation of said bank card;
- a sub-set of the card number of said bank card;
- a step for generating and storing an index (IDX) representing said set of data useful for the processing of a transaction, for said selected type of service;
- and, when a transactions is at least partially initiated from the communications terminal:
- a step for creating (30) a secured communications channel with a server for processing transactions by means of a communications network;
- a step for transmitting, to a virtual payment terminal (VPOI) instantiated within an execution server on said communications network, by means of said secured communications channel, of an identifier (PAN_S) representing the type of said transaction to be processed, said index (IDX) representing a set of data useful for the processing of said transaction, and a personal identification number (PIN) entered into said communications terminal.

7. Communications terminal comprising means for implementing the steps of the method according to claim 6.

8. Computer program product downloadable from a communications network and/or stored on a carrier readable by a computer and/or executable by a microprocessor, **characterized in that** it comprises program code instructions for executing a method for provisioning a virtual card according to claim 6, when it is executed on a computer.
